# EUROPEAN PATENT APPLICATION

(11) **EP 1 524 056 A1**
(43) Date of publication of application: **20.04.2005**
(21) Application number: 04380197.6
(22) Date of filing: 01.10.2004
(51) Int. Cl.: B23C 3/26, B27F 5/12

(54) **Adzing method on aluminium section members for sliding doors, sliding windows and the like**

(30) Priority: 14.10.2003 ES 200302381
(71) Applicant: GIESSE GROUP IBERIA, S.A., 08980 Sant Feliu de Llobregat (Barcelona) (ES)
(72) Inventor: Lambertini, Marco, 08980 Sant Feliu de Llobregat-Barcelona (ES)
(74) Representative: Morgades Manonelles, Juan Antonio

(57) **Abstract**

The section member is secured on a milling machine (4) to automatically form an adzing thereon for fitting a locking device according to previously selected dimensions with a size selector (13). With a function selector it is possible to automatically form an opening for the hook of the locking device by drilling a front face of the section member to an appropriate size. The method provides a good finish with reduced tolerances, additional finishing steps being avoided allowing the locking device to be fitted and held in the section member without using screws and the like.

## Description

The present invention relates to an adzing method on aluminium section members for sliding doors, sliding windows and the like, wherein significant advantages are achieved regarding the production processes of the state of the art to which the present invention belongs.

The invention belongs to the technical field of the manufacture of aluminium sliding doors and sliding windows. Up to now, in this field, aluminium tubular or perimetric section members for sliding doors, sliding windows and the like are typically machined through a die cutting press to form the adzing where the locking mechanism is fitted by a manual process, consequently with an operator's significant intervention. The main disadvantage of such conventional machining method of section members is that the final adzing made by the die press does not show a good finish and therefore a subsequent finishing step becomes necessary thus involving a much longer process and higher production costs, which negatively influences the total cost of the finished product.

The invention provides a new adzing method on aluminium section members for the manufacture of sliding doors and windows, especially the adzing inside of which a door or window locking mechanism is provided. With the method of the invention a good finish is achieved in which the locking mechanism is fitted with extremely reduced tolerance levels without using additional finish processes. It therefore allows to reduce costs and to increase the quality of the machining and consequently the final product.

There is now described the method of the present invention. For machining the die for fitting the door or window locking device, an aluminium section member is provided, whether it is of a tubular type or perimetric type, on the milling machine working surface. The surface of the metallic section member to be machined should face the end of the milling machine cutting head. Then, said section member is secured by means of hand actuated pneumatic claws and through a size selector (or a mechanic end stop) the desired size of the rectangular machining is selected (two sizes may, for example, be selected: either 185 x 19.5 mm or 165 x 19.5 mm). Once the size of the adzing to be made on the aluminium section member has been selected, rotation of the mill begins along with spraying of cutting oil. The milling head is lowered to the starting point and drilling of the section member begins at said starting point.

According to the above examples of sizes, a longitudinal milling of the locking (165/185 mm) from right to left (or vice versa), a cross milling (19.5 mm) forward to rearward (or vice versa) and a longitudinal milling in a reverse direction (left to right, (or vice versa)) is made. Subsequently, a cross milling from backward to forward (or vice versa) is made (return to the machining starting point) and the machining is completed with a 165/185 mm x 19.5 mm rectangle. Finally, the milling machine cutting head is moved upward and returned again back to the rest point. The driving motor of the milling machine is stopped as well as spraying of cutting oil.

To form the opening for the door or window locking hook outlet, the aluminium section member is placed on the working surface. The surface to be machined should be arranged upward as stated before. The aluminium section member is secured by means of said hand actuated pneumatic claws. A function selector in the milling machine allows the operator to set the milling function to form the opening for the locking hook. Selection of such function results in rotation of the mill and spraying of cutting oils. The head is lowered to the starting point (right hand end) and drilling of the section member begins at the starting point. A longitudinal milling of the hook outlet is made (for example, 20 mm) from right to left (or vice versa) and the outlet hook linear machining is completed (20 mm x 8 mm, by way of example). Finally, the head is moved upward and returned back to the rest point, and the motor and spraying of cutting oil are stopped.

Milling operations are carried out by using a milling machine associated with a copying mechanism or pantograph having a size selector acting on stops for determining the adzing type to be made (or, alternatively, a mechanic end stop) and a function selector for selecting the type of work, whether it is machining of the die for the locking device or for the outlet of the hook thereof.

With the automatic milling method provided by the invention and such as disclosed above, large productivity advantages are achieved in the manufacture of aluminium sliding doors and sliding windows since it is possible to reduce costs of the finished product as the finishing step used in the prior art production processes is now avoided. It is also to be highlighted the fact that the finishing provided by the mill allows fitting of the locking device in the door or window more directly and in an easier way, without the need for employing fastening screws.

Further details and features of the method of present invention will be apparent from the following detailed description of a preferred embodiment which will be given hereinafter by way of a non limitative example, which refer to accompanying drawings, in which:
Fig. 1 is a side elevational view of a milling machine that is used for the adzing method on aluminium section members for sliding doors, sliding windows and the like of the present invention;
Fig. 2 is a front elevational view of the milling machine in fig. 1; and
Fig. 3 is a fragmentary perspective view of an aluminium section member having an adzing that it has been formed according to the method of the present invention.

A detailed list of the various parts cited in the present patent application is given below:
(1) adzing;
(2) aluminium section member;
(3) working plane;
(4) milling machine;
(5) section member gripping means;
(6) pneumatic claws;
(7) support;
(8) milling machine bedplate;
(9) opening for the locking device hook outlet;
(10) motor of the milling machine;
(11) cutting head;
(12) cutting head bar;
(13) size selector;
(14) milling machine control panel;
(15) function selector;
(16) milling machine pneumatic pistons; and
(17) adjusting device.

A milling machine is shown in the figures by way of example that is used to form an adzing (1) on an aluminium section member (2) of the type of those employed in sliding doors, sliding windows and the like.

The adzing (1) has the purpose of housing a locking device (not shown) to lock the door or window in the frame or stationary part.

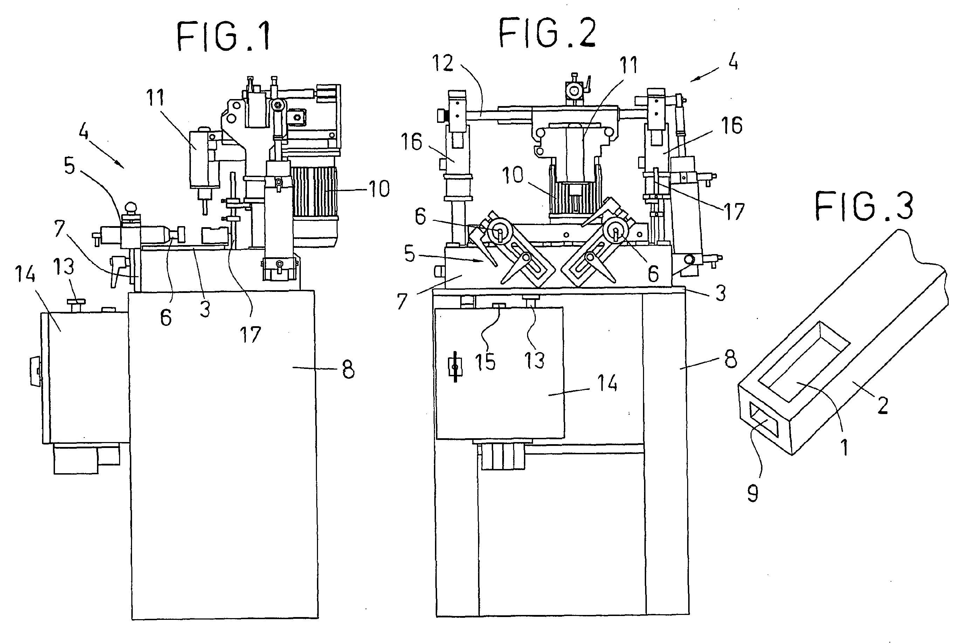

For this purpose, there is provided an aluminium section member (2) on a working plane (3) in a milling machine (4) as shown in figs. 1 and 2 of the drawings attached in the present specification. The section member is appropriately secured by using gripping means (5) of the aluminium section member (2) in said milling machine (4). Said gripping means (5) of the section member (2) essentially comprise hand actuated pneumatic claws (6) associated with a support (7) integral with the bedplate (8) of the milling machine (4). Once the section member (2) has been secured to the milling machine (4), operator acts on a size selector (13) fitted in a control panel (14) of the milling machine (4) to choose the desired size (for example 185 x 19.5 mm or 165 x 19.5 mm).

Once the dimensions of the adzing (1) of the aluminium section member have been selected, it is drilled according to previously selected dimensions starting the motor (10) of the milling machine (4) as well as the spraying of cutting oil. The cutting head (11) may be moved in three axes: horizontally toward the sides along a bar (12) shown in fig. 2, as well as forward and back, and also vertically in the milling machine (4) by pneumatic pistons (16) according to the desired adzing depth. An adjusting device (17) allows adjusting of the lowering limit of the cutting head (11).

The cutting head (11) is lowered to a starting point (rear right corner) and the section member is drilled (2) at said starting point. The complete drilling results in the adzing (1) of the aluminium section member (2) where the locking device body device will be placed. Finally, the head (11) is returned back to the initial point in the milling machine (4) and the motor (10) is stopped as well as spraying of the cutting oil.

Particularly, the adzing (1) of the aluminium section member (2) is carried out by means of a longitudinal milling from right to left (or vice versa), a traverse milling forward to backward (or vice versa), a longitudinal milling from left to right (or vice versa) and a traverse milling backward to forward (or vice versa).

There is also provided the possibility of forming an opening (9) in a front face of the section member for the outlet of the locking device hook (not shown) which is made by drilling the section member (2) to the appropriate dimensions according to the size of the locking device. Said opening (9) is carried out by means of a longitudinal milling of the outlet of the hook from right to left (or vice versa) and a linear machining of the outlet of the hook.

The functions of the milling machine (4) for machining the aluminium section member (2) to form the adzing (1) or the opening (9) may be desirably selected through a function selector (15) provided in the milling machine (4).

Once having been sufficiently described what the method of the present invention consists in accordance to the enclosed drawings, it is understood that any detail modification can be introduced as appropriate, provided that variations may alter the essence of the invention as summarised in the appended claims.

## Claims

1. Adzing method on aluminium section members for sliding doors, sliding windows and the like comprising at least forming, on an aluminium section member (2), an adzing (1) for fitting therein a locking device acting on a hook that is coupled to the frame or stationary part of the door or window, **characterized in that** it comprises the steps of:
- arranging the surface of the section member to be machined (2) facing the head of a milling machine (4);
- securing said section member (2); and
- drilling said section member (2) according to previously selected dimensions by means of said milling machine (4) to form the adzing (1) in the section member (2) where the body of said locking device will be fitted.

2. Adzing method on aluminium section members for sliding doors, sliding windows and the like as claimed in claim 1, **characterized in that** said step of drilling the section member (2) according to previously selected dimensions is carried out by means of a size selector (13) in said milling machine (4).

3. Adzing method on aluminium section members for sliding doors, sliding windows and the like as claimed in claim 1, **characterized in that** said step of drilling the section member (2) according to previously selected dimensions is carried out by means of a mechanical end stop in said milling machine (4).

4. Adzing method on aluminium section members for sliding doors, sliding windows and the like as claimed in claim 1, **characterized in that** it includes a further step of forming an opening (9) for the outlet of said hook of the locking device that is carried out by drilling of a front face of the section member (2) to the appropriate measures, said further step being carried out through a function selector (15) in said milling machine (4).

5. Adzing method on aluminium section members for sliding doors, sliding windows and the like as claimed in claim 1 or claim 4, **characterized in that** the section member (2) is secured by means of hand actuated pneumatic claws (6).

6. Adzing method on aluminium section members for sliding doors, sliding windows and the like as claimed in claim 1, **characterized in that** said step of drilling the section member (2) according to previously selected dimensions to form the adzing (1) of the section member (2) comprises the steps of:
- longitudinal milling from right to left (or vice versa);
- traverse milling forward to backward (or vice versa);
- longitudinal milling from left to right (or vice versa); and
- traverse milling from backward to forward.

7. Adzing method on aluminium section members for sliding doors, sliding windows and the like as claimed in claim 4, **characterized in that** said step of drilling of the section member (2) to form the opening (9) of the hook comprises the steps of:
- longitudinal milling of the outlet of the hook from right to left (or vice versa); and
- linear machining of the outlet of the hook.
